# FASCICULE DE BREVET EUROPEEN

(11) **EP 3 473 888 B1**
(45) Date de publication et mention de la délivrance du brevet: **18.11.2020**
(21) Numéro de dépôt: 17209649.7
(22) Date de dépôt: 21.12.2017
(51) Int. Cl.: F16H 3/54, F16K 31/05

(54) **TRAIN EPICYCLOÏDAL AVANTAGEUSEMENT POUR UN SYSTÈME SERVOMOTEUR, PROCÉDÉ ET SYSTÈME SERVOMOTEUR UTILISANT UN TEL TRAIN EPICYCLOÏDAL**
PLANETENGETRIEBE, INSBESONDERE FÜR EIN SERVOMOTORENSYSTEM, VERFAHREN UND SERVOMOTORENSYSTEM, DAS DIESES PLANETENGETRIEBE NUTZT
PLANETARY GEARSET, ADVANTAGEOUSLY FOR A SERVO SYSTEM, AND SERVO SYSTEM AND METHOD USING SUCH A PLANETARY GEARSET

(30) Priorité: 20.10.2017 FR 1759946
(43) Date de publication de la demande: 24.04.2019
(73) Titulaire: Bernard Controls, 95500 Gonesse (FR)
(72) Inventeur: BERNARD, Etienne, 75016 Paris (FR); LEPAN, Rémy, 95820 Bruyères sur Oise (FR)
(74) Mandataire: Berger, Helmut

(56) Documents cités:
- EP-A1- 0 010 416
- WO-A2-2009/027821
- DE-C1- 4 201 849
- US-A1- 2010 267 508

## Description

L'invention concerne un train épicycloïdal, avantageusement pour un système servomoteur, du type comprenant, enfermés dans un carter entre un arbre d'entrée et un arbre de sortie, un porte-satellites, une couronne et un solaire, ainsi qu'un procédé de commande notamment d'une vanne et un système servomoteur utilisant un tel train épicycloïdal et équipé d'un mécanisme de commande manuelle à volant.

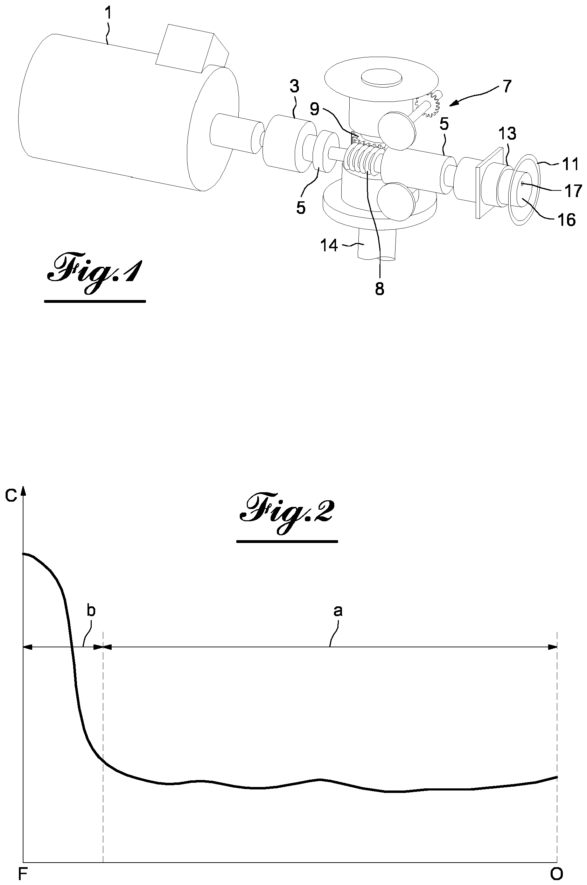

Il est connu que l'effort nécessaire pour la fermeture d'une vanne n'est pas constant et évolue en fonction de la course de l'organe mobile, de la manière illustrée à la figure 2. Pendant la longue phase d'approche de l'organe mobile, c'est-à-dire avant l'arrivée sur le siège d'étanchéité de la vanne, l'effort nécessaire est relativement constant et faible et n'augmente que considérablement dans la courte phase du serrage jusqu'à la fermeture de la vanne, dont la durée est généralement inférieure à 10% de la durée de la course totale. Or, dans les systèmes servomoteurs à volant de commande manuelle, qui sont connus, le mécanisme de commande manuelle de la vanne est conçu uniquement en fonction de la courte phase d'efforts élevés sans tenir compte de la phase d'approche beaucoup plus longue.

Les documents WO2009027821A2, DE4201849C1 et US2010267508 comprennent les caractéristiques du préambule de la revendication 1.

L'invention a pour but de pallier cet inconvénient.

Pour atteindre ce but, l'invention propose l'utilisation d'un train épicycloïdal de transmission de la vitesse entre l'entrée et la sortie, qui est caractérisé en ce qu'il comprend des moyens de changement du rapport de transmission des vitesses, qui sont actionnables de l'extérieur.

Selon l'invention, le train épicycloïdal est caractérisé en ce que la couronne est montée rotative dans le carter et en ce que les moyens de commande sont adaptés pour imposer à la couronne une vitesse de rotation déterminée pour la réalisation d'un premier rapport de vitesses et pour solidariser en rotation la couronne et le porte-satellites pour réaliser un deuxième rapport de vitesses.

Selon une particularité, le train épicycloïdal est caractérisé en ce que la couronne est susceptible d'être bloquée en rotation par les moyens de commande.

Selon l'invention, le train épicycloïdal est caractérisé en ce que la couronne et le porte-satellites sont pourvus chacun d'une denture extérieure et en ce que les moyens de commande comprennent un pignon qui est déplaçable entre une position d'engrènement seulement de la denture extérieure de la couronne et une position de solidarisation en rotation de la couronne et du porte-satellites par engrènement des dentures extérieures de la couronne et du porte-satellites.

Selon une autre particularité, le train épicycloïdal est caractérisé en ce qu'il produit, dans la position de blocage seulement de la couronne, une multiplication de la vitesse transmise entre l'entrée et la sortie et dans sa position de solidarisation en rotation de la couronne et des porte-satellites, une transmission de la vitesse entre l'entrée et la sortie au rapport 1:1.

Selon encore une autre particularité, le train épicycloïdal est caractérisé en ce que le pignon est monté sur une tige qui est déplaçable axialement dans le carter, parallèlement à l'axe du train épicycloïdal, et en ce que la tige comprend à son extrémité extérieure un organe de commande du changement du rapport de vitesse et de sélection du rapport souhaité.

Selon encore une autre particularité, le train épicycloïdal est caractérisé en ce que le changement et la sélection d'un rapport de vitesses se fait en enfonçant l'organe de commande dans le carter ou en tirant cet organe du carter.

Selon encore une autre particularité, le train épicycloïdal est caractérisé en ce que le porte-satellites constitue l'organe d'entrée et le solaire, l'organe de sortie.

Le procédé de commande d'un organe actionneur rotatif d'un dispositif tel qu'une vanne, par déplacement de l'organe rotatif par rotation d'un volant d'actionnement manuel entre une position d'ouverture de la vanne et une position de fermeture de la vanne, le déplacement à partir de la position d'ouverture dans la position de fermeture comprenant une première phase d'approche de la position de fermeture dans laquelle le couple appliqué au volant est relativement faible et une deuxième de réalisation de la fermeture, dans laquelle le couple à appliquer au volant augmente fortement, est caractérisé en ce que l'on prévoit pendant la première phase d'approche, par rapport à la deuxième phase, une multiplication du nombre de tours, entre le volant et l'organe rotatif.

Selon une particularité avantageuse, le procédé est caractérisé en ce que l'on utilise un train épicycloïdal selon l'invention pour le changement de vitesse de transmission..

Selon une autre particularité avantageuse, le procédé est caractérisé en ce que l'on utilise, pendant la deuxième phase (b) de la course, le train épicycloïdal dans sa configuration dans laquelle la couronne et le porte-satellites sont solidaires en rotation et pendant la première phase (a) dans la configuration de la désolidarisation de la couronne.

Le système servomoteur pour la commande d'un organe actionneur d'une vanne d'ouverture et de fermeture d'une voie d'écoulement d'un fluide, telle qu'une conduite, et pourvu d'un volant de commande manuelle de l'organe actionneur, est caractérisé en ce qu'il comprend un train épicycloïdal selon l'invention.

Selon une particularité avantageuse, le système est caractérisé en ce qu'il met en œuvre le procédé selon l'invention.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue schématique d'un système servomoteur, selon l'invention ;
- la figure 2 est un schéma du fonctionnement d'une vanne, et illustre la relation entre le couple de fermeture de la vanne et la course de la vanne ;
- les figures 3 et 4 sont des vues en perspective d'un premier modèle de réalisation d'un train épicycloïdal selon l'invention, montrant celui-ci respectivement dans sa configuration de multiplication de la vitesse et dans sa configuration d'un rapport de transmission de vitesses 1:1 ;
- les figures 5 et 6 sont des illustrations schématiques fonctionnelles d'une première version d'un deuxième mode de réalisation d'un train épicycloïdal selon l'invention, montrant celui-ci respectivement dans sa configuration de multiplication de la vitesse et dans sa configuration d'un rapport de transmission de vitesse 1 : 1, et
- les figures 7 et 8 sont des illustrations schématiques fonctionnelles d'une seconde version du deuxième mode de réalisation du train épicycloïdal, montrant celui-ci respectivement dans sa configuration de multiplication de la vitesse et dans sa configuration d'un rapport de transmission de vitesse 1 : 1.

L'invention sera décrite ci-après, à titre d'exemple non limitatif, dans son application à un système servomoteur multi-tours tel que représenté à la figure 1.

Selon le schéma synoptique fonctionnel de cette figure, le système comprend, monté en série, un moteur 1, un train épicycloïdal 3, un limiteur d'efforts 5 et un dispositif réducteur 7 comportant une vis sans fin 8 et une roue dentée 9 entraînée par la vis 8 et solidaire en rotation de l'arbre de sortie 14 destinée à entraîner un organe actionneur tel que l'organe rotatif d'une vanne de fermeture et d'ouverture d'un conduit. La figure montre en outre, également monté en série avec la vis sans fin 8, un volant 11 d'actionnement manuel de l'actionneur et un système d'embrayage 13 et conformément à l'invention, un train épicycloïdal 16 pourvu d'un organe de commande 17.

La figure 2 montre la courbe caractéristique du couple C de l'organe actionneur mobile de la vanne en fonction de la course de cet organe entre sa position d'ouverture O à droite du schéma et sa position de fermeture F à gauche. On constate que la courbe comporte deux parties chacune définissant une étape du processus de fermeture de la vanne, à savoir une première phase a au cours de laquelle le couple C est relativement faible et sensiblement constant et qui est la phase d'approche de l'organe rotatif avant de venir en contact avec le siège de la vanne, et la phase b de serrage jusqu'à la fermeture de la vanne.

Lorsqu'il s'agit de fermer la vanne manuellement, par l'actionnement du volant 11, la force nécessaire pour la fermeture de la vanne et l'effort que l'opérateur doit appliquer au volant est relativement faible dans la phase d'approche a mais augmente fortement au cours de la phase b au cours de laquelle l'organe actionné, à savoir l'opercule, est en prise sur le siège de la vanne.

Conformément à l'invention, il est proposé d'optimiser l'utilisation de la commande manuelle en l'adaptant à la courbe de la figure 2. Ce but est atteint en prévoyant entre les deux éléments qui sont le volant et l'organe rotatif de fermeture et d'ouverture de la vanne, pendant la phase d'approche a où le couple est approximativement constant et faible, une augmentation de la vitesse de transmission entre les deux éléments, c'est-à-dire du nombre de tours, par rapport à la vitesse de transmission entre les deux éléments dans la phase b où l'opérateur, pour assurer la fermeture, doit fournir un effort beaucoup plus élevé.

En effet, dans la phase a où le couple est faible, l'invention permet de réduire le nombre de tours à appliquer au volant pour une course de vanne donnée. On effectue à cette fin une multiplication entre le volant et l'organe rotatif. Certes, puisqu'il y a une multiplication, l'effort au volant doit être plus important par rapport à une transmission du couple direct, sans multiplication. Mais, dans la mesure où le couple nécessaire est relativement faible, en choisissant une valeur de multiplication appropriée, l'augmentation de l'effort peut-être maintenant à une valeur qui n'est pas gênante pour l'opérateur. Dans la phase b où le couple à fournir augmente, l'invention prévoit de revenir à une transmission directe, ce qui équivaut à une augmentation du nombre de tours à donner au volant, par rapport à la phase a. Mais en augmentant ainsi le nombre de tours à appliquer au volant, on baisse l'effort à fournir au volant.

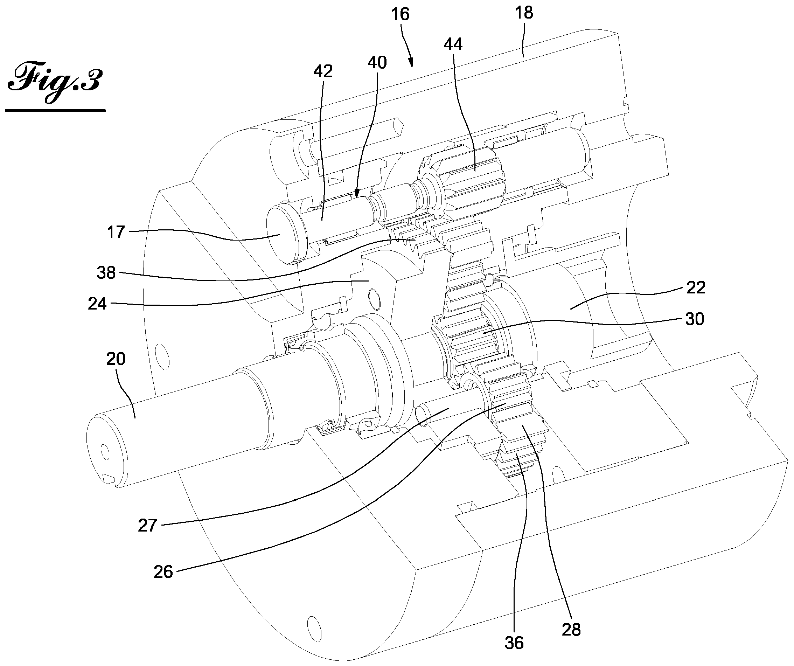

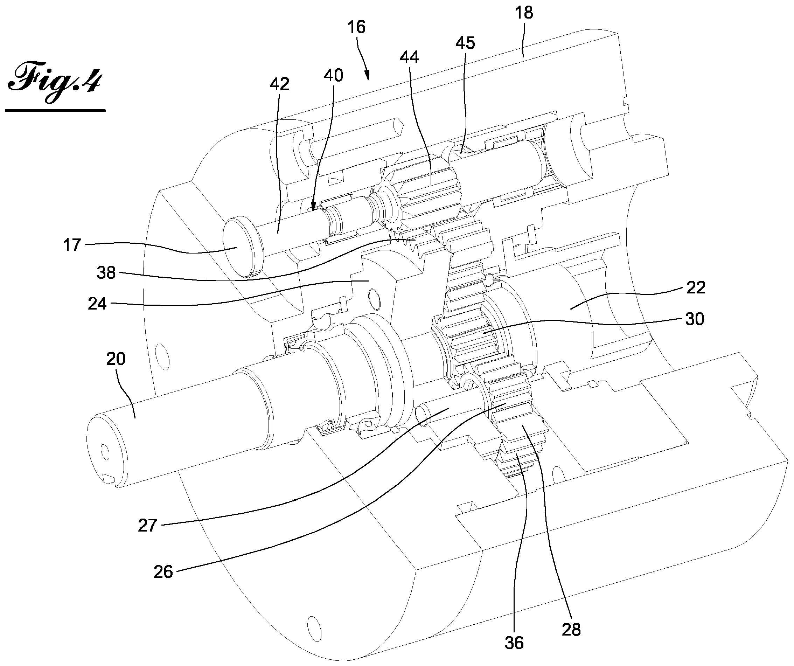

Pour mettre en œuvre cet objectif, l'invention propose de placer un train épicycloïdal à deux rapports de transmission de vitesse entre le volant 11 et la vis sans fin 8. Un tel train épicycloïdal est représenté, à titre d'exemple non limitatif, aux figures 3 et 4. Le train épicycloïdal selon l'invention, noté 16, comprend, enfermé dans un carter 18 entre l'arbre d'entrée 20 et la sortie 22, un porte-satellites 24, solidaire en rotation de l'arbre 20 et porteur de trois satellites 26 rotatifs chacun autour d'un axe 27 du porte-satellites, une couronne 28 à denture intérieure engrénant les satellites 26 et un solaire 30 qu'entraînent les satellites et qui est destiné à être solidaire en rotation de l'arbre de sortie non représenté.

Dans cette configuration, lorsque la couronne est bloquée, c'est-à-dire immobilisée en rotation dans le carter, conformément à la figure 3, les satellites 26 provoquent la rotation du solaire 30 et le train épicycloïdal, entre son entrée et sa sortie, produit une multiplication dans la transmission de la vitesse, qui est déterminée par les dentures des composants constituant le train.

La vitesse de rotation de l'arbre de sortie et donc de la vis sans fin 8 est ainsi multipliée par rapport à la vitesse de rotation que l'opérateur applique au volant 11, par le rapport de multiplication du train épicycloïdal.

Conformément à l'invention, le train épicycloïdal est utilisé dans cette configuration de la figure 3, dans la phase a où le couple à fournir à l'organe actionneur est faible.

Par contre, pour assurer la vitesse de rotation plus faible pendant la phase b qui nécessite un couple plus élevé et donc un effort plus important de la part de l'opérateur, le train épicycloïdal 16 est pourvu de moyens qui assurent une transmission de vitesse entre l'entrée et la sortie à un rapport 1:1.

A cette fin, le train épicycloïdal, conformément à l'invention, est pourvu d'un dispositif 40 qui permet au train épicycloïdal de fonctionner aux deux modes de rapport de vitesses, et de sélectionner le rapport souhaité. Pour que le dispositif puisse accomplir ces fonctions, la couronne est montée librement rotative dans le carter et on prévoit sur la surface radialement extérieure de la couronne une denture extérieure 36 et sur la surface périphérique extérieure du porte-satellites, une denture extérieure 38. Le dispositif 40 de commande sélective des deux modes de fonctionnement aux rapports de transmission de vitesse différents, comporte une tige 42 qui est déplaçable dans le carter 18 dans la partie radialement extérieure par rapport au porte-satellites et à la couronne et porte un pignon 44. La tige 42 est déplaçable parallèlement à l'axe du train épicycloïdal entre la position représentée à la figure 3 dans laquelle le pignon 44 engrène seulement la denture extérieure 36 de la couronne et est bloqué en rotation dans le carter 18 par engagement dans une denture 45 de ce dernier (figure 4), et la position selon la figure 4 dans laquelle le pignon 44 engrène à la fois la denture extérieure 36 de la couronne et la denture extérieure 38 du porte-satellites.

Il est à noter que dans sa position d'engagement seulement de la denture 36 de la couronne et le blocage en rotation du pignon, la couronne est également immobilisée en rotation. Dans cette configuration, le train épicycloïdal fonctionne donc dans le premier mode de multiplication de la vitesse de sortie par rapport à la vitesse d'entrée. Dans sa deuxième position, selon la figure 4, dans laquelle le pignon est librement rotatif dans le carter et engrène à la fois la denture 36 de la couronne et la denture 38 du porte-satellites en solidarisant ainsi en rotation la couronne et le porte-satellites, le train épicycloïdal fonctionne dans le deuxième mode du rapport 1:1. En effet, étant donné que la couronne et le porte-satellites sont solidaires en rotation et ont donc le même mouvement de rotation, les satellites 26 ne peuvent pas tourner autour de leur axe. Par conséquent, puisque les satellites sont fixes par rapport aux porte-satellites, le solaire est également fixe par rapport à ce dernier, ce qui a pour conséquence que la vitesse d'entrée est identique à la vitesse de sortie et le train épicycloïdal produit ainsi le rapport de transmission 1:1.

Pour pouvoir effectuer la sélection du mode de rapport souhaité, la tige comporte à son extrémité extérieure libre un organe, ici à titre d'exemple un bouton d'actionnement qui constitue l'organe de commande 17 sur la figure 1 et permet donc la commande et la sélection de l'extérieur.

Comme il ressort des figures, le train épicycloïdal à commande bi-vitesses peut être amené de sa configuration de la figure 4, de solidarisation en rotation de la couronne et du porte-satellites, dans sa configuration de blocage en rotation de la couronne, selon la figure 3, par enfoncement de la tige dans le carter par appui sur le bouton 17. En tirant la tige, le train revient dans sa configuration de la figure 4.

Il ressort de la description qui précède, que le procédé de commande de l'organe actionneur, par actionnement du volant 11, implique deux phases de fonctionnement, avec des rapports de transmission de vitesses différents, à savoir une première phase a qui est caractérisée par un rapport de multiplication des vitesses et une deuxième phase b se caractérisant par le rapport 1:1.

Bien entendu, ce procédé n'est pas limité à la commande d'une vanne et peut être appliqué à la commande de tout autre actionneur approprié.

En ce qui concerne le train épicycloïdal, tel que décrit et représenté aux figures, son utilisation dans le procédé et le système susmentionnés est donnée à titre d'exemple et n'est pas limitative et il peut être employé dans tout autre domaine technique où un fonctionnement à deux vitesses est souhaitable.

Il est à noter que le train épicycloïdal lui-même, tel que décrit et représenté, ne constitue qu'un exemple de réalisation. En effet, au lieu de prévoir une couronne bloquée en rotation dans le carter dans son mode de multiplication de la vitesse, c'est-à-dire du nombre de tours, entre l'entrée et la sortie du train épicycloïdal, on pourrait aussi envisager que la couronne tourne à une vitesse donnée qui pourrait être par exemple imposée par une vitesse de rotation appropriée du pignon, ce qui permettrait de modifier le rapport de multiplication. Cette modification pourrait être effectuée de l'extérieur par exemple par application à l'extrémité extérieure de la tige porteuse du pignon d'un mouvement rotatif approprié.

Un autre exemple de mise en œuvre de l'invention pourrait être de supprimer le pignon sélecteur en montant la couronne dans le carter de façon qu'elle soit coulissante entre une position dans laquelle elle est bloquée en rotation dans une empreinte du carter, ce qui permet d'obtenir la multiplication, et une position dans laquelle elle engrène la denture extérieure du porte-satellites, ce qui solidarise en rotation la couronne et le porte-satellites pour pouvoir obtenir le rapport 1:1.

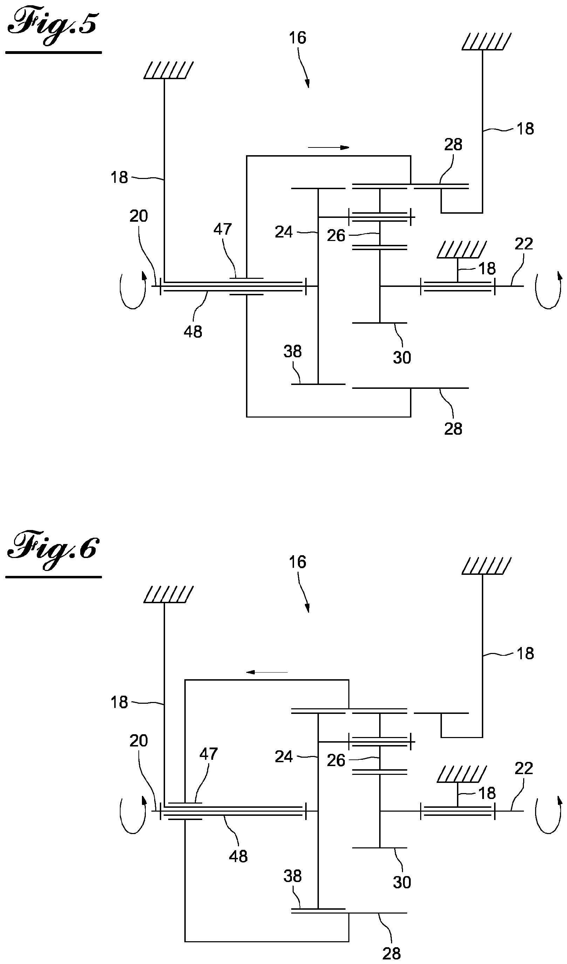

Les figures 5 à 8 donnent le schéma de deux versions de cette mise en œuvre de l'invention utilisant une couronne coulissante en translation. Sur ces figures, les composants déjà présents dans le premier mode de réalisation selon les figures 3 et 4 sont désignés par les mêmes références.

Les figures 5 et 6 illustrent une première version de mise en œuvre de ce deuxième mode de réalisation d'un train épicycloïdal selon l'invention, dans laquelle la couronne 28 est montée, comme il est indiqué par des flèches, axialement déplaçable dans le carter 18 en étant coulissante en 47 sur une pièce de guidage 48 qui entoure coaxialement l'arbre d'entrée 20 et est montée fixe dans le carter. Sur la figure 5, la couronne 28 est dans sa position de blocage en rotation dans le carter 18, en engrainant seulement les satellites 26 du porte-satellites 24. Comme expliqué plus haut, dans cette configuration le train épicycloïdal fonctionne dans son mode de multiplication de la vitesse entre son entrée 20 et sa sortie 22, de façon correspondant à la figure 3. Dans le cas de la figure 6, la couronne 28 est déplacée axialement en translation dans sa position d'engrainement seulement de la denture extérieure 38 du porte-satellites 24. Dans cette position de solidarisation en rotation de la couronne 28 et du porte-satellites 24, le train épicycloïdal fonctionne dans son mode de transmission selon le rapport 1 1, conformément à la figure 4.

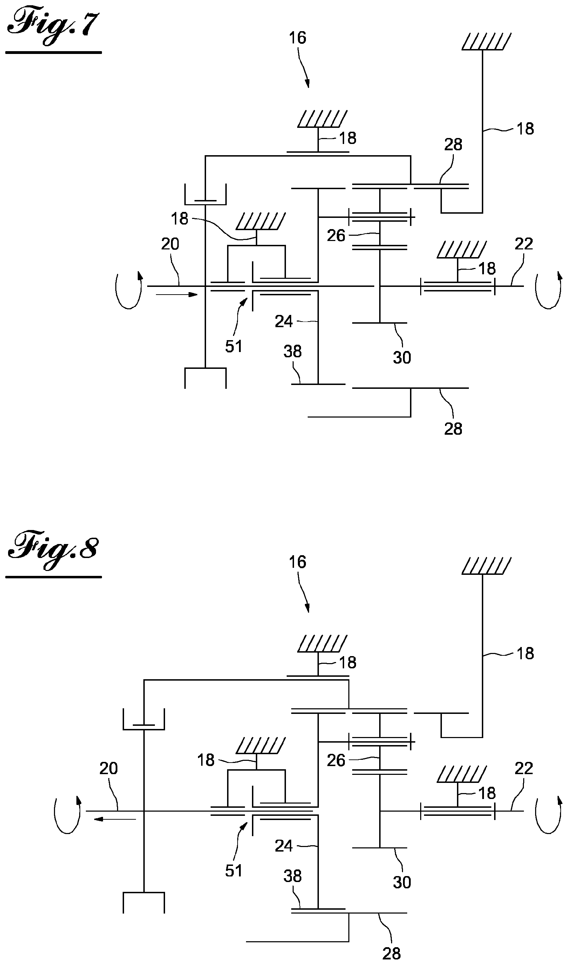

Dans la seconde version de mise en œuvre du deuxième mode de réalisation de l'invention, sur les figures 7 et 8, la couronne 28 et l'axe du volant, c'est-à-dire l'arbre d'entrée 20 forment un ensemble qui est déplaçable axialement dans le carter 18, comme cela est indiqué par les flèches. La liaison en rotation entre l'arbre d'entrée 20 et le porte-satellites 24 se fait par des cannelures glissantes indiquées schématiquement par la référence 51. La figure 7 montre la couronne 28 dans sa position de blocage en rotation dans le carter 18, et la figure 8 dans sa position de solidarisation en rotation avec le porte-satellites 24.

Il est également envisageable dans le cadre de l'invention, d'inverser la structure du train épicycloïdal en plaçant le solaire à l'entrée et le porte-satellites à la sortie, ce qui permettrait d'obtenir un train épicycloïdal donnant, dans une configuration, un rapport de transmission 1:1, et dans une autre configuration un rapport où la vitesse de sortie est inférieure à la vitesse d'entrée.

## Revendications

1. Train épicycloïdal, notamment pour un système servomoteur, du type comportant, disposé dans un carter (18), un porte-satellites (24) porteur d'une pluralité de satellites (26), une couronne (28) et un solaire (30), et des moyens (40) de changement du rapport de vitesse d'entrée et de sortie, qui sont actionnables de l'extérieur du carter (18), où la couronne (28) est montée rotative dans le carter (18) et les moyens de commande (40) sont adaptés pour imposer à la couronne (28) une vitesse de rotation déterminée pour la réalisation d'un premier rapport de vitesses et pour solidariser en rotation la couronne (28) et le porte-satellites (24) pour réaliser un deuxième rapport de vitesses,
**caractérisé en ce que** la couronne (28) et le porte-satellites (24) sont pourvus chacun d'une denture extérieure (36, 38) et **en ce que** les moyens de commande (40) comprennent un pignon (44) qui est déplaçable entre une position d'engrènement seulement de la denture extérieure (36) de la couronne et une position de solidarisation en rotation de la couronne (28) et du porte-satellites (24) par engrènement des dentures extérieures (36, 38) de la couronne et du porte-satellites.

2. Train épicycloïdal selon la revendication 1, **caractérisé en ce que** la couronne (28) est susceptible d'être bloquée en rotation par les moyens de commande (40).

3. Train épicycloïdal selon une des revendications 1 ou 2 **caractérisé en ce que** la couronne (28) est montée déplaçable dans le carter entre une position dans laquelle elle est bloquée en rotation dans le carter et une position dans laquelle elle est solidaire en rotation du porte-satellites (24).

4. Train épicycloïdal selon les revendications 1 à 3, **caractérisé en ce qu'**il produit, dans la position d'engrenage seulement de la couronne (28), une multiplication de la vitesse transmise entre l'entrée et la sortie, et dans sa position de solidarisation en rotation de la couronne (28) et du porte-satellites (24), une transmission de la vitesse entre l'entrée et la sortie au rapport 1:1.

5. Train épicycloïdal selon l'une des revendications 1 à 4, **caractérisé en ce que** le pignon (44) est monté sur une tige (42) qui est déplaçable axialement dans le carter (18), parallèlement à l'axe du train épicycloïdal, et **en ce que** la tige (42) comprend à son extrémité extérieure un organe (17) de commande du changement du rapport de vitesse et de sélection du rapport souhaité.

6. Train épicycloïdal, selon la revendication 5, **caractérisé en ce que** le changement et la sélection d'un rapport de vitesses se fait en enfonçant l'organe de commande (17) dans le carter (18) ou en tirant l'organe du carter (18).

7. Train épicycloïdal selon l'une des revendications 1 à 6, **caractérisé en ce que** le porte-satellites constitue l'organe d'entrée et le solaire (30), l'organe de sortie.

8. Procédé de commande d'un organe actionneur rotatif d'une vanne, par déplacement de l'organe rotatif par rotation d'un volant d'actionnement manuel (11), entre une position d'ouverture (O) de la vanne et une position de fermeture (F) de la vanne, le déplacement à partir de la position d'ouverture dans la position de fermeture comprenant une première phase d'approche (a) de la position de fermeture dans laquelle le couple nécessaire pour la fermeture de la vanne est relativement faible et une deuxième phase (b) de réalisation de la fermeture, dans laquelle le couple nécessaire augmente fortement, **caractérisé en ce que** l'on prévoit pendant la première phase d'approche (a) par rapport à la deuxième phase (b), une multiplication du nombre de tours entre le volant et l'organe rotatif, à l'aide d'un train épicycloïdal (16) selon l'une des revendications 1 à 7.

9. Procédé selon la revendication 8, **caractérisé en ce que** l'on utilise pendant la deuxième phase (b) de la course, le train épicycloïdal dans sa configuration dans laquelle la couronne (28) et le porte-satellites (24) sont solidarisés en rotation par le pignon (44) des moyens de commande (40) et pendant la première phase (a) dans sa configuration dans laquelle la couronne (28) est désolidarisée du porte-satellites (24).

10. Système servomoteur pour la commande d'un organe actionneur d'une vanne d'ouverture et de fermeture d'une conduite, par l'intermédiaire d'un dispositif à vis sans fin (18) entraînant une roue dentée (9), qui est pourvu d'un volant de commande manuelle (11) de l'organe actionneur, **caractérisé en ce qu'**il comprend un train épicycloïdal (16) selon l'une des revendications 1 à 7 qui est interposé entre le volant (11) et la vis sans fin (8).

11. Système selon la revendication 10, **caractérisé en ce qu'**il met en oeuvre le procédé selon l'une des revendications 8 ou 9.

## Patentansprüche

1. Planetengetriebe, insbesondere für ein Servomotorensystem, vom Typ umfassend, angeordnet in einem Gehäuse (18), einen Planetenträger (24), der eine Vielzahl von Planeten (26), ein Hohlrad (28) und ein Sonnenrad (30) und Mittel (40) zur Änderung der Beziehung zwischen Eingangs- und Ausgangsgeschwindigkeit, die von außerhalb des Gehäuses (18) betätigt werden können, wobei das Hohlrad (28) drehend im Gehäuse (18) montiert ist und die Mittel zur Steuerung (40) ausgelegt sind, um das Hohlrad (28) in eine bestimmte Rotationsgeschwindigkeit zur Durchführung einer ersten Beziehung von Geschwindigkeiten und zur festen Verbindung in Rotation des Hohlrads (28) und des Planetenträgers (24) zu versetzen, um eine zweite Beziehung von Geschwindigkeiten durchzuführen.
**dadurch gekennzeichnet, dass** das Hohlrad (28) und der Planetenträger (24) jeweils mit einer äußeren Zahnung (36, 38) ausgestattet sind, und dadurch, dass die Mittel zur Steuerung (40) ein Ritzel (44) umfassen, das zwischen einer Position des Eingriffs nur der äußeren Zahnung (36) des Hohlrads und einer Position der festen Verbindung in Rotation des Hohlrads (28) und des Plantenträgers (24) durch Eingriff der äußeren Zahnungen (36, 38) des Hohlrads und des Planetenträgers verschiebbar ist.

2. Planetengetriebe nach Anspruch 1, **dadurch gekennzeichnet, dass** das Hohlrad (28) in Rotation durch die Mittel zur Steuerung (40) blockiert werden kann.

3. Planetengetriebe nach einem der Ansprüche 1 oder 2, **dadurch gekennzeichnet, dass** das Hohlrad (28) im Gehäuse zwischen einer Position, in der es im Gehäuse in Rotation blockiert ist, und einer Position, in der es in Rotation mit dem Planetenträger (24) fest verbunden ist, verschoben werden kann.

4. Planetengetriebe nach Anspruch 1 bis 3, **dadurch gekennzeichnet, dass** es, in der Position des Eingriffs nur des Hohlrads (28), eine Vervielfältigung der Geschwindigkeit, die zwischen dem Eingang und dem Ausgang übertragen wird, und in seiner Position der festen Verbindung in Rotation des Hohlrads (28) und des Plantenträgers (24) eine Übertragung der Geschwindigkeit zwischen dem Eingang und dem Ausgang im Verhältnis 1:1 erzeugt.

5. Planetengetriebe nach einem der Ansprüche 1 bis 4, **dadurch gekennzeichnet, dass** das Ritzel (44) auf einem Stift (42) montiert ist, der axial im Gehäuse (18) verschoben werden kann, parallel zur Achse des Planetengetriebes, und dadurch, dass der Stift (42) an seinem äußeren Ende ein Organ (17) zur Steuerung der Änderung des Geschwindigkeitsverhältnisses und der Auswahl des gewünschten Verhältnisses umfasst.

6. Planetengetriebe nach Anspruch 5, **dadurch gekennzeichnet, dass** die Änderung und die Auswahl des Geschwindigkeitsverhältnisses durch das Einschieben des Steuerorgans (17) in das Gehäuse (18) oder das Ziehen des Organs aus dem Gehäuse (18) erfolgt.

7. Planetengetriebe nach einem der Ansprüche 1 bis 6, **dadurch gekennzeichnet, dass** der Planetenträger das Eingangsorgan und das Sonnenrad (30) das Ausgangsorgan darstellt.

8. Verfahren zur Steuerung eines Organs zur drehenden Betätigung eines Ventils durch Verschieben des drehenden Organs durch Drehen eines Handrads zur manuellen Betätigung (11) zwischen einer Öffnungsposition (O) des Ventils und einer Verschlussposition (F) des Ventils, wobei die Verschiebung aus der Öffnungsposition in die Verschlussposition eine erste Annäherungsphase (a) der Verschlussposition, in der das erforderliche Anzugsmoment zum Verschluss des Ventils relativ gering ist, und einer zweiten Phase (b) der Durchführung des Verschlusses, in dem sich das erforderliche Anzugsmoment stark erhöht, umfasst, **dadurch gekennzeichnet, dass** während der ersten Annäherungsphase (a) mit Bezug auf die zweite Phase (b) eine Vervielfachung der Anzahl der Drehungen zwischen dem Handrad und dem drehenden Organ mit Hilfe einen Planetengetriebes (16) nach einem der Ansprüche 1 bis 7 vorgesehen ist.

9. Verfahren nach Anspruch 8, **dadurch gekennzeichnet, dass** während der zweiten Phase (b) des Wegs das Planetengetriebe in seiner Konfiguration, in der das Hohlrad (28) und der Planetenträger (24) in Rotation durch den Stift (44) der Mittel zur Steuerung (40) fest verbunden sind, und während der ersten Phase (a) in seiner Konfiguration, in der das Hohlrad (28) vom Planetenträger (24) abgelöst ist, verwendet wird.

10. Servomotorensystem zur Steuerung eines Organs zur Betätigung eines Ventils zur Öffnung oder zum Verschluss einer Leitung mit Hilfe einer Vorrichtung mit Endlosschraube (18), die ein Zahnrad (9) antreibt, das mit einem Handrad zu manuellen Steuerung (11) des Betätigungsorgans ausgestattet ist, **dadurch gekennzeichnet, dass** es ein Planetengetriebe (16) nach einem der Ansprüche 1 bis 7 umfasst, das zwischen dem Handrad (11) und der Endlosschraube (8) angeordnet ist.

11. System nach Anspruch 10, **dadurch gekennzeichnet, dass** es das Verfahren nach einem der Ansprüche 8 oder 9 durchführt.

## Claims

1. A planetary gearset, in particular for a servo system, of the type comprising, arranged in a casing (18), a planet carrier (24) bearing a plurality of planet gears (26), a ring gear (28) and a sun gear (30), and means (40) for changing the input and output gear ratio, which are actionable from outside the casing (18), where the ring gear (28) is mounted rotating in the casing (18) and the control means (40) are suitable for imposing a determined rotation speed on the ring gear (28) in order to produce a first gear ratio and for securing the ring gear (28) and the planet carrier (24) in rotation to produce a second gear ratio,
**characterized in that** the ring gear (28) and the planet carrier (24) are each provided with outer gear teeth (36, 38) and **in that** the control means (40) comprise a pinion (44) that is movable between a gear mesh position of only the outer gear teeth (36) of the ring gear and a position securing the ring gear (28) and the planet carrier (24) in rotation by gear mesh of the outer gear teeth (36, 38) of the ring gear and the planet carrier.

2. The planetary gearset according to claim 1, **characterized in that** the ring gear (28) can be blocked in rotation by the control means (40).

3. The planetary gearset according to one of claims 1 or 2, **characterized in that** the ring gear (28) is mounted movable in the casing between a position in which it is blocked in rotation in the casing and a position in which it is secured in rotation with the planet carrier (24).

4. The planetary gearset according to claims 1 to 3, **characterized in that** it produces, in the gear mesh position only of the ring gear (28), a multiplication of the speed transmitted between the input and the output, and in its position of the ring gear (28) and the planet carrier (24) secured in rotation, a transmission of the speed between the input and the output at the 1:1 ratio.

5. The planetary gearset according to one of claims 1 to 4, **characterized in that** the pinion (44) is mounted on a rod (42) that is movable axially in the casing (18), parallel to the axis of the planetary gearset, and **in that** the rod (42) comprises, at its outer end, a member (17) for controlling the change of the gear ratio and selecting the desired ratio.

6. The planetary gearset according to claim 5, **characterized in that** the change and selection of a gear ratio is done by pushing the control member (17) into the casing (18) or pulling the member from the casing (18).

7. The planetary gearset according to one of claims 1 to 6, **characterized in that** the planet carrier constitutes the input member and the sun gear (30) constitutes the output member.

8. A method for controlling a rotary actuator member of a valve, by moving the rotary member through rotation of a manual actuating flap (11), between an open position (O) of the valve and a closed position (F) of the valve, the movement from the open position to the closed position comprising a first approach phase (a) of the closed position in which the torque necessary to close the valve is relatively low and a second phase (b) for performing the closing, in which the necessary torque increases greatly, **characterized in that** provided, during the first approach phase (a) relative to the second phase (b), is a multiplication of the number of revolutions between the flap and the rotary member, using a planetary gearset (16) according to one of claims 1 to 7.

9. The method according to claim 8, **characterized in that** during the second phase (b) of the travel, the planetary gearset is used in its configuration in which the ring gear (28) and the planet carrier (24) are secured in rotation by the pinion (44) of the control means (40) and during the first phase (a) in its configuration in which the ring gear (28) is separated from the planet carrier (24).

10. A servo system for controlling an actuator member of an opening and closing valve of a duct, by means of a worm device (18) driving a sprocket (9), which is provided with a manual control wheel (11) of the actuator member, **characterized in that** it comprises a planetary gearset (16) according to one of claims 1 to 7 that is inserted between the wheel (11) and the worm (8).

11. The system according to claim 10, **characterized in that** it implements the method according to one of claims 8 or 9.
